# EUROPEAN PATENT SPECIFICATION

(11) **EP 2 101 922 B1**
(45) Date of publication and mention of the grant of the patent: **20.10.2010**
(21) Application number: 07862902.9
(22) Date of filing: 14.12.2007
(51) Int. Cl.: B05B 1/08, B05B 17/04, B05B 7/04, B05B 1/26, A62C 5/00, A62C 31/00, F23D 11/36, F23D 11/40, F23D 14/62, F23D 11/10

(54) **FULL COVERAGE FLUIDIC OSCILLATOR WITH AUTOMATED CLEANING SYSTEM AND METHOD**
FLUID-OSZILLATOR MIT GROSSER FLÄCHENABDECKUNG MIT AUTOMATISIERTEM REINIGUNGSSYSTEM UND -VERFAHREN
OSCILLATEUR FLUIDIQUE PLEINE COUVERTURE AVEC SYSTEME DE NETTOYAGE AUTOMATISE ET PROCEDE

(30) Priority: 14.12.2006 US 874891 P; 24.09.2007 US 960261 P
(43) Date of publication of application: 23.09.2009
(73) Proprietor: BOWLES FLUIDICS CORPORATION, Columbia Maryland 21045 (US)
(72) Inventor: GOPALAN, Shridar, Westminster, MD 21157 (US); RUSSELL, Gregory, Catonsville, MD 21228 (US)
(74) Representative: Stiel, Jürgen
(86) International application number: PCT/US2007/025579
(87) International publication number: WO 2008/076346

(56) References cited:
- US-A1- 2003 075 623
- US-A1- 2004 181 865
- US-A1- 2004 181 865
- US-A1- 2006 226 266
- US-A1- 2007 136 937
- US-A1- 2007 136 937
- US-B1- 7 134 609
- US-B1- 7 134 609

## Description

### TECHNICAL FIELD OF THE INVENTION

This invention relates to new methods and apparatus for distributing the flow of liquid from a spray device and to methods and apparatus for automated cleaning or disinfecting for structures or vessels having fluid-containing sidewalls.

### DESCRIPTION OF THE BACKGROUND ART

Fluidic inserts or oscillators are well known for their ability to provide a wide range of distinctive liquid sprays. The distinctiveness of these sprays is due to the fact that they are characterized by being oscillatory in nature, as compared to the relatively steady state flows that are emitted from standard spray nozzles.

For ease of construction, fluidic oscillators or inserts are generally manufactured as thin, rectangular members that are molded or fabricated from plastic so as to have especially-designed, liquid flow channels fabricated into either their broader top or bottom surfaces. They are typically inserted into the cavity of a housing whose inner walls are configured to form a liquid-tight seal around the insert's boundary surface which contains the especially-designed flow channels. Pressurized liquid enters such an insert and is sprayed from it. However, it should be noted that fluidic oscillators can be constructed so that their liquid flow channels are placed practically anywhere (e.g., on a plane that passes through the member's center) within the member's body; in such instances the fluidic would have a clearly defined channel inlet and outlet.

There are many well known designs of fluidic circuits that are suitable for use with such fluidic inserts. Many of these have some common features, including: (a) at least one power nozzle configured to accelerate the movement of the liquid that flows under pressure through the insert, (b) an interaction chamber through which the liquid flows and in which the flow phenomena is initiated that will eventually lead to the spray from the insert being of an oscillating nature, (c) a liquid inlet, (d) a pathway that connects the inlet and the power nozzle/s, and (e) an outlet or throat from which the liquid sprays from the insert.

Examples of fluidic circuits may be found in many commonly owned patents, including USPN 3,185,166 (Horton & Bowles), 3,563,462 (Bauer), 4,052,002 (Stouffer & Bray), 4,151,955 (Stouffer), 4,157,161 (Bauer), 4,231,519 (Stouffer), which was reissued as RE 33,158, 4,508,267 (Stouffer), 5,035,361 (Stouffer), 5,213,269 (Srinath), 5,971,301 (Stouffer), 6,186,409 (Srinath) and 6,253,782 (Raghu).

A key performance factor in many industrial applications for assorted spray devices, including fluidic oscillators, is the size of the area that the sprays from such devices can cover with liquid droplets - or alternatively, the lateral rate of spread of the fluid droplets as they proceed downstream. The degree of uniformity in the spatial distribution of these droplets can also be very important.

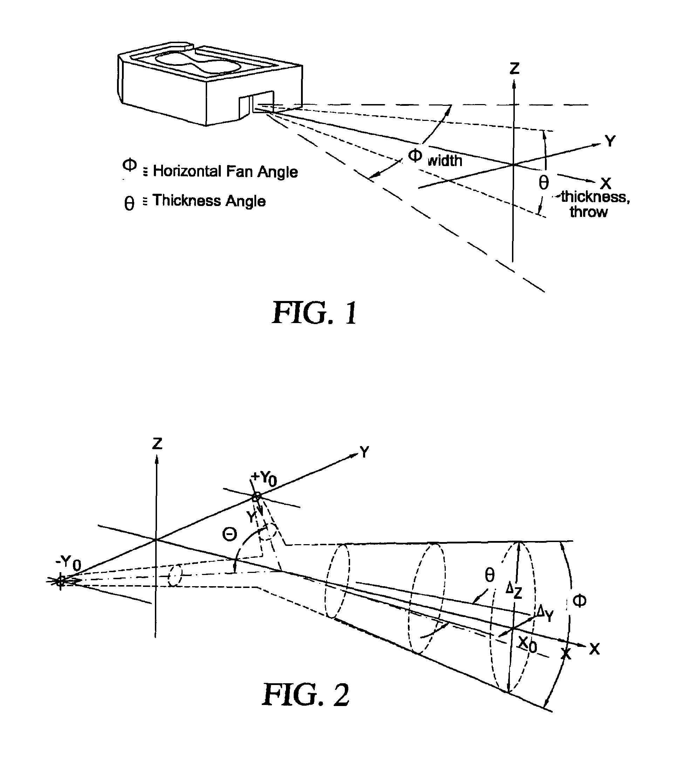

Spray from a fluidic oscillator spreads as it flows away from its origin at the oscillator's outlet (see Fig. 1), and the centerline of the jet or spray is defined to be in the x-direction and it exhibits both a lateral-horizontal spread in the x-y plane (referred to as the "width" of the spray and due primarily to the unique flow phenomena occurring within the insert that yields an essentially horizontally oscillating spray which is defined by a horizontal fan angle, Φ, and a lateral-vertical spread in the x-y plane (referred to as the "thickness" or "throw" of the spray) which is defined by a vertical spread angle, θ.

As fluidic oscillators have continued to be used in more types of applications, the opportunity has arisen to re-examine and improve upon their design as a way to increase the lateral spreading characteristics of the sprays they emit so as to enable them to cover or wet larger areas or volumes. The results of applicant's research in this area and the inventions that have come from applicant's work are described herein.

Potential applications for fluidic oscillators having wide lateral spread include systems for automatically spraying or disinfecting a variety of surfaces. Household cleaning and commercial custodial cleaning include many tasks that people would rather postpone or avoid, such as cleaning the toilet bowl. Harsh chemicals have been employed in this cleaning task, and the results have often been noxious. Cleaning compositions which also provide a disinfecting or sanitizing effect are often used in the removal of stains and grime from surfaces in lavatory fixtures such as toilets, shower stalls, bathtubs, bidets, sinks, etc. Two types of commonly encountered stains in lavatories include "hard water" stains and "soap scum" stains. Surfaces with such stains may be found in homes, kitchens and hospitals, etc. Various compositions of cleaning agents and are known to the art and are generally suited for one type of stain but not necessarily for all stains. For example, it is known that highly acidic cleaning agents comprising strong acids, such as hydrochloric acids, are useful in the removal of hard water stains. However, the presence of strong acids is known to be an irritant to the skin and further offers the potential of toxicological danger. Other classes of cleaning compositions are known to be useful on soap scum stains, however, generally such compositions comprise an organic and/or inorganic acid, one or more synthetic detergents from commonly recognized classes such as those described in U.S. Pat. No. 5,061,393; U.S. Pat. No. 5,008,030; U.S. Pat. No. 4,759,867; U.S. Pat. No. 5,192,460; U.S. Pat. No. 5,039,441. Generally, the compositions described in these patents are claimed to be effective in the removal of soap scum stains from such hard surfaces and may find further limited use in other classes of stains. However, the formulations of most of the compositions within the aforementioned patents generally have relatively high amounts of acids (organic and/or inorganic) which raises toxicological concerns. One final consideration is that all of these formulations require someone to actually scrub the surface with a brush or other implement, while breathing the potentially toxic fumes produced during the cleaning process.

The prior art also includes automated deodorizing liquid dispensers (e.g., for use in urinals) or a variety of solid disk-shaped products intended to slowly dissolve in a toilet tank's water or in the bottom of a urinal, but those products do not offer adequate cleaning power and so provide an inadequate cleaning or disinfecting result. In an effort to improve cleaning effectiveness, US patent 7,234,175 proposes use of a first liquid agent formulated to react with a second solid agent in the bowl, where the first liquid agent is mixed with flush water and the second solid agent to cleanse and deodorize the bowl, thereby requiring the user to provide and periodically replenish two cleaning agents. It also appears that the user must also periodically flush to provide cleansing fluid flow over whatever portion of the bowl's surface is reached by the mixed agents. All of these bowl cleaning methods have proven unsatisfactory, and so home-makers and custodians still clean toilet bowls by hand.

US 2003/075623 discloses a nozzle assembly with a fluidic circuit having a fluid inlet and first and second branches configured to divide fluid flowing into said inlet into first and second branches, wherein said first branch terminates distally in a first orifice and said second branch terminates distally in a second orifice;
said first branch being configured to project a first fluid jet along a first fluid jet axis; said second branch being configured to project a second fluid jet along a second fluid jet axis in a co-planar alignment with said first fluid jet axis, said second fluid jet axis intersecting said first fluid jet axis in free space at a selected jet angle;
at least one source of fluid under pressure in fluid communication with said chamber's fluid inlet;
wherein said fluid under pressure flows into said fluidic circuit and projects said first and second fluid jets into free space to impinge upon one another.

There is a need, therefore, for a convenient, inexpensive and unobtrusive automated system and method to clean, sanitize or disinfect structures or vessels having fluid-containing sidewalls such as toilet bowls and bidets.

### SUMMARY OF THE INVENTION

There has been summarized above, rather broadly, the prior art that is related to the present invention in order that the context of the present invention may be better understood and appreciated. In this regard, it is instructive to also consider the objects and advantages of the present invention.

It is an object of the present invention to provide novel methods for increasing the downstream areas that can be wetted by the flows that are emitted by stationary spray nozzles.

It is also an objective of the present invention to improve upon the spray performance of fluidic oscillators.

Another object of the present invention to overcome the above mentioned difficulties by providing a convenient, inexpensive and unobtrusive automated system and method to clean, sanitize or disinfect structures or vessels having fluid-containing sidewalls such as toilet bowls, bidets and sinks.

Yet another object of the invention is to provide an easily installed, unobtrusive, inexpensive system adapted for safe, unattended operation to clean toilet bowls.

In accordance with the method and structure of the present invention, applicant's research on the ways to increase the lateral spreading rates of liquid jets has yielded valuable insight on how to control and regulate such flows. A useful flow phenomenon was observed when the centerlines of the outputs from two steady, round jets were directed to lie in the same plane such that they have an included jet angle, Θ, and so that the jets intersect in ambient or free space, to impinge upon one another or collide and form a resultant spray. The resultant spray's droplets project or fly generally in the x direction and a y-z cross section of this spray at a point x₀ reveals that its length Δz is much greater than its width Δy.

Beyond the intersection where the jets impinge upon one another, the jets are seen to interact so as to spread rapidly in the plane that is perpendicular to the of the plane of the original jets - applicants call this resultant spray or downstream flow a "sheet jet" so as to reflect the change in cross-sectional shape of the jet from the cross section of the original round jets. In keeping with tradition, applicants say that the plane in which the jet is spreading most rapidly (i.e., here - x-z plane) has a characteristic fan angle, Φ. Its rate of spread in the x-y plane is said to have a characteristic thickness angle, θ.

By imposing an instability on these impinging round jets (in the form of an oscillation of their flow about their centerlines), applicants have discovered that the resulting sheet jet will also oscillate about its x-axis so as to wet a much larger cross-sectional area at any downstream distance from the jet's origin. The thickness angle θ for this oscillating sheet is greatly increased beyond that which was seen for the relatively steady state flow.

By causing the flow from the jets to oscillate about their centerlines in the x-y plane, the sheet jet is also seen to oscillate about the x-axis so as to wet a much larger y-z cross-sectional area at any downstream range or value of x. This is called a "full coverage" spray. One of the preferred embodiments of the device used to create the resultant sheet includes a member that has a flow channel which is molded into the interior of a fluid circuit. The fluidic circuit has an inlet and two branches, channels or legs which divide the inlet flow and direct divided flows to respective orifices at the distal end of each of the branches. The width of branches preferably decrease in cross sectional area as the orifice is approached so the branches to serve to accelerate the liquid that flows through them. The orifices can be circular in cross section and so shape round jets of fluid (but could also be square or rectangular to shape square, rectangular or thin linear/planar jets).

The front face of the member is concave or shaped such that the length or section between the opposing orifices is indented towards the inlet to a selected depth so that there is no wall section adjacent these orifices to which the jets that issue from them would be inclined to attach themselves. Thus, the fluid jets issuing from opposing orifices are referred to as "free" or unattached jet flows.

The centerlines of the orifices lie in the same plane and intersect at a "jet angle" Θ, where the jet intersection is in free space or in an ambient space.

Within the fluidic circuit, each branch optionally includes a sidewall defining a channel or fluid flow path including a sidewall segment with an inwardly projecting abrupt protrusion which serves to abruptly reduce the branch's cross sectional area, thereby throttling fluid flow around the protrusion and creating a separation region downstream the protrusion. A time-varying or unsteady flow vortex forms in the separation region downstream of protrusion.

The time-varying action of these vortices give the jets which issue from each orifice a time-varying deflection from the orifice's central axis, thereby generating the flows which impinge or collide to make an oscillating sheet.

Applicant's research with such flows has shown that the jet angle Θ is a major controlling factor in establishing the oscillating sheet's fan angle Φ. For example, applicant has found that as the jets are made to effectively face each other (e.g., Θ goes to 170 - 180 degrees) that the fan angle goes to 360 degrees. Applicants also found that this device's jet angle Θ greatly impacts the size of the droplets in the resulting spray, with larger jet angles Θ yielding smaller sheet droplet sizes. Additionally, the amount of flow throttling or vorticity creation occurring in each of the branch flows affects the magnitude of the jet's oscillations and the resulting thickness angle θ of the oscillating sheet. If there is no throttling in the branch flows, it was observed that the downstream flow more closely resembles a substantially planar sheet flow with less thickness than was observed for branch flows from fluidic circuit structures including the vortex generating structures.

In accordance with an application-related aspect of the present invention, an automated toilet bowl cleaning system and method economically and safely provides substantially complete coverage of the bowl's interior surfaces by periodically spraying a uniform pattern of fine drops of a solution formulated for cleaning, disinfecting or sanitizing the bowl from a single nozzle assembly that is supplied with pressurized fluid flow from a powered pump. The powered pump is preferably housed with a battery power supply in a compact resilient housing that is adapted to attach or mount onto or near the toilet, and the pump is in fluid communication with the nozzle assembly via a flexible supply tube having a hollow interior lumen.

High pressure pumps use excessive energy and present possible safety issues, and so, in the present invention, a low operating pressure of approximately 0,207*10⁵ Pa [three (3) pounds per square inch (PSI)] provides sufficient flow for a novel nozzle assembly to uniformly spray over substantially all of a three hundred sixty degree (360°) circular spray pattern, by virtue of a specially adapted fluidic circuit carried within a housing adapted to support the nozzle assembly and aim the spray pattern.

The nozzle assembly includes, preferably, an insert or fluidic circuit made from two parts and no moving parts, where the insert is received within the nozzle assembly's housing. The nozzle assembly occupies very little space in the bowl and so is conveniently mounted adjacent the bowl's rim. The battery powered pump and its housing also occupy very little package space, thereby making the entire system quick and easy to install in confined spaces.

Fluidic circuits and fluidic oscillators adapted to generate a spray in a sheet are known. To choose just one example, commonly owned US patent 4151955 discloses a fluid dispersal device utilizing the Karman Vortex street phenomenon to cyclically oscillate a fluid stream before issuing the stream in a desired flow pattern. A chamber includes an inlet and outlet with an obstacle or island disposed therebetween to establish the vortex street. The vortex street causes the stream to be cyclically swept transversely of its flow direction in a manner largely determined by the size and shape of the obstacle relative to the inlet and outlet, the spacing between the obstacle and the outlet, the outlet area, and the Reynolds number of the stream. Depending on these factors, the flow pattern of the stream issued from the outlet may be (a) a swept jet, residing wholly in the plane of the device and which breaks up into droplets solely as a result of the cyclic sweeping, the resulting spray pattern forming a line when impinging on a target; or (b) a swept sheet, the sheet being normal to the plane of the device and being swept in the plane of the device, the resulting pattern containing smaller droplets than the swept jet pattern and covering a two-dimensional area when impinging upon a target.

While fluidic circuits have been adapted to generate spray patterns well suited for many applications (e.g., spraying windshields), they have not, before now, been adapted to spray substantially the entire peripheral interior surface of a vessel or bowl.

The new development provided by the nozzle assembly of the present invention is integration of a fluidic oscillator in a novel assembly that (for side feed embodiments) can spray over substantially all of a three hundred sixty degree (360°) circular pattern, by virtue of a specially adapted fluidic circuit integrally formed in the nozzle assembly. This new nozzle assembly generates first and second oscillating fluid jets that are each directed from opposing sides at a point of intersection. The first fluid jet and the second fluid jet collide to make a resultant spray pattern reaching even that portion of the bowl's surface that lies behind the nozzle assembly, from the perspective of the point of impingement.

The nozzle assembly's first and second impinging jets intersect at an angle referred to as a "jet angle", and the jet angle is selected to provide an omni-directional spray pattern geometry with uniform coverage (around the bowl) and thickness (in vertical spray pattern cross section). The spray pattern is confined within the bowl, and does not extend above the bowl's interior surface, and so can be characterized as confined within an imaginary hemisphere, such that substantially no spray projects above the plane defining the bowl's upper circumferential edge.

Nozzle assembly embodiments optionally incorporate a rear feed configuration for receiving the pumped fluid, and therefore provide slightly less than full 360° coverage, since the nozzle assembly's housing and fluid feed structure block a small portion of the bowl's surface.

The cleaning system's pump is preferably battery powered and preferably includes a programmable controller or a timer programmed to periodically energize the pump and spray the bowl's interior surface with the fluid. The pump housing optionally includes or is in fluid communication with a reservoir containing the fluid selected for cleaning, deodorizing or sanitizing the toilet bowl and the energized pump draws the fluid into the pump's inlet and pumps the fluid into the supply tube at a selected low pressure of, e.g., 0,207*10⁵ Pa (3 PSI). The fluid is fed from the supply tube into the nozzle assembly inlet, whereupon the fluid enters the fluidic oscillator's interior chamber, which defines first and second fluid flow paths terminating in opposing first and second output lumens to generate first and second oscillating fluid jets. As noted above, the first and second jets intersect or impinge on one another at a selected jet impingement angle to form a sheet spraying fluid droplets in an omni-directional pattern to wet substantially the entire interior surface of the bowl.

Since the first and second jets oscillate or alter direction in a manner that appears to be unstable, the intersection point where the impinging opposed jets collide changes or varies slightly over time, and so the resulting sheet has a vertical thickness.

The exterior shape or tapered sidewall geometry of the nozzle assembly's housing contributes to the flow of fluid behind or at the rear of the housing, and so the resulting sheet of spray can have 360° of coverage or somewhat less, where the nozzle assembly blocks only very little spray in the areas behind the nozzle assembly.

Varying the jet angle or angle of incidence for the first and second jets creates varying resultant spray patterns, and the applicants have found that a jet angle of approximately 160° creates a pattern of coverage having slightly more fluid flow in the front, toward the farthest portion of the bowl's interior (directly away from the nozzle assembly's mount or hook) for a more even application of the fluid around the bowl's interior.

The above and still further objects, features and advantages of the present invention will become apparent upon consideration of the following detailed description of a specific embodiment thereof, particularly when taken in conjunction with the accompanying drawings, wherein like reference numerals in the various figures are utilized to designate like components.

### BRIEF DESCRIPTION OF THE DRAWINGS

FIG. 1 illustrates a coordinate system that is used to describe the three-dimensional, downstream development of liquid sprays.
FIG. 2 illustrates how two round jets whose centerlines lie in the same plane and intersect downstream can form a spray whose dimension or rate of spread in the plane perpendicular to that of the original plane is considerably larger than it is in this original plane; this downstream flow is identified as a sheet jet to express the change of cross-sectional shape that has occurred in the original round jets.
FIG. 3 illustrates the flow of phenomena that have been observed to occur when the original round jets are caused to oscillate about their centerlines - the resulting sheet jet is seen to oscillate about its x-axis so as to wet a much larger cross-sectional area at any downstream distance from the jet's origin.
FIG. 4 is a top view of a preferred embodiment of the fluidic circuit of present invention.
FIG. 5 is a top view of a second preferred embodiment of the fluidic circuit present invention.
FIG. 6 is a top view of a preferred embodiment of an improvement to the fluidic circuit previously disclosed in applicant's own USPAN 10/979,032, in accordance with the present invention.
FIG. 7 is a top view of an embodiment of an improvement to the fluidic circuit previously disclosed in applicant's own USPAN 10/979,032, not in accordance with the present invention, as the fluid jets do not collide in free space.
FIG 8 illustrates the automatic bowl cleaning apparatus and method, in accordance with the present invention.
Fig. 9 is an exploded perspective view of one embodiment of the nozzle assembly for the automatic bowl cleaning apparatus of FIG 8, in accordance with the present invention.
Fig. 10 illustrates, in plan view, one part of the "rear feed" embodiment of the nozzle assembly's fluidic oscillator, showing the orientation of the lumens configured for making the first and second jets, the filter, and the structural features dimensioned to generate the step amplifier oscillation, in accordance with the present invention.
Fig. 11 illustrates, in perspective and partial cross section, the rear feed embodiment the nozzle assembly, showing the direction of spray resulting of the from the impingement of the first and second jets and the structural features of the nozzle assembly's housing shaped to maximize the spray coverage angle to just under 360°, in accordance with the present invention.
Fig. 12 illustrates, in plan view, one part of the "side feed" embodiment of the nozzle assembly, showing the orientation of the lumens configured for making the first and second jets for a desired jet angle and sheet thickness, and the reversing chamber oscillation structural features, in accordance with the present invention.
Fig. 13 illustrates, in perspective and partial section, one part of the "side feed" embodiment of the nozzle assembly, showing the tapered depth of the fluid path in the output lumen, as well as the fluid flow path over the contoured exterior surface (1) to provide 360° coverage, in accordance with the present invention.
FIG. 14 is a distal end view of the nozzle assembly for the automatic bowl cleaning apparatus of FIGs 8 and 9, in accordance with the present invention.
FIG. 15 is a partial cross section view of the nozzle assembly for the automatic bowl cleaning apparatus of FIGs 8, 9 and 14, in accordance with the present invention.
FIG. 16 is a proximal end view of the nozzle assembly for the automatic bowl cleaning apparatus of FIGs 8, 9, 14 and 15, in accordance with the present invention.
FIG 17 is a narrow side view, in elevation, illustrating an embodiment of the oscillating jet fluidic circuit insert of FIGs 8, 9, 14 and 15, in accordance with the present invention.
FIG 18 is a broad side view illustrating the internal features (such as the inwardly projecting amplifiers) of the oscillating jet fluidic circuit insert of FIG 17, in accordance with the present invention.
FIG 19 is a broad side view of a flat-sheet (nearly zero thickness) omni-directional spray generating insert, illustrating the internal features of the non-oscillating jet fluidic circuit insert, not in accordance with the present invention.

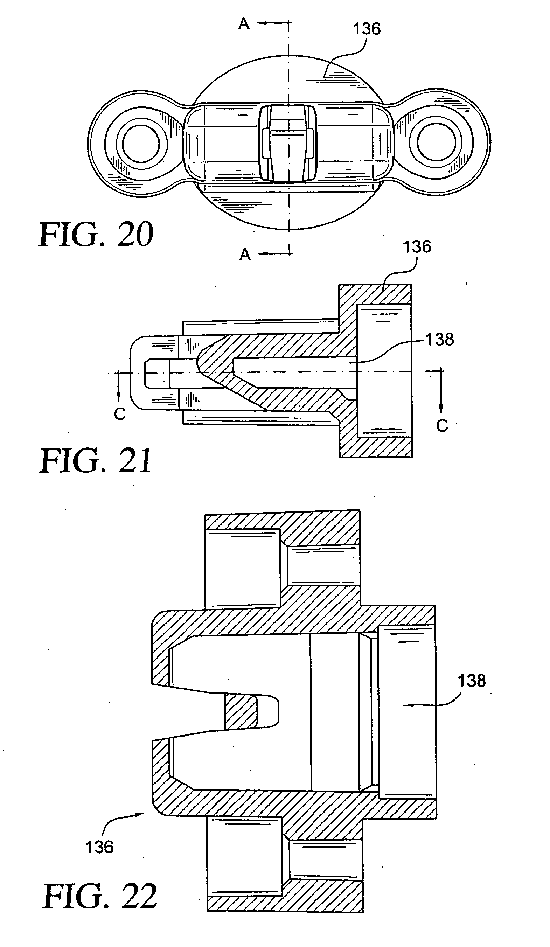

FIG 20 illustrates the nozzle assembly housing of FIGS 14-16 adapted to receive the fluidic circuit insert of FIGS 17 and 18, in accordance with the present invention.
FIG 21 illustrates a cross sectional view of the nozzle assembly housing of FIG 20, along line A-A, in accordance with the present invention.
FIG 22 illustrates a cross sectional view of the nozzle assembly housing of FIG 21 along line C-C, in accordance with the present invention.

### DESCRIPTION OF THE PREFERRED EMBODIMENTS AND BEST MODES

### FOR CARRYING OUT THE INVENTION

Before explaining exemplary embodiments and methods of the present invention in detail, it is to be understood that the invention is not limited in its application to the details of construction and to the arrangements of the components set forth in the following description or illustrated in the Figures. The invention is capable of other embodiments and of being practiced and carried out in various ways. Also, it is to be understood that the phraseology and terminology employed herein are for the purpose of description and should not be regarded as limiting.

As noted above, FIG 1 provides a frame of reference and spray from a fluidic oscillator spreads as it flows away from its origin at the oscillator's outlet. The centerline of the jet or spray is defined to be in the x-direction and it exhibits both a lateral-horizontal spread in the x-y plane (referred to as the "width" of the spray and due primarily to the unique flow phenomena occurring within the insert that yields an essentially horizontally oscillating spray which is defined by a horizontal fan angle, Φ, and a lateral-vertical spread in the x-z plane (referred to as the "thickness" or "throw" of the spray) which is defined by a vertical spread or "thickness" angle, θ. In the example illustrated in FIG 1, Φ = 90° and θ ≈ 1.5° and so this is referred to as an effective planar jet that has a large horizontal rate or angle of spread as it proceeds downstream, or outwardly away from the jet intersection where impingement occurs.

Applicant's research on the ways to increase the lateral spreading rates of liquid jets has yielded valuable insight on how to control and regulate such flows. For example, the diagram of FIG. 2 illustrates the flow phenomena that applicant has observed when aiming or directing the centerlines of the jet outputs from two steady, round jets (note: these initial jets could also have been square, planar, etc.) to lie in the same (e.g., x-y) plane such that they have an included jet angle, Θ, and so that the jets intersect downstream.

In FIG 2, first and second converging round jets are shown in the x-y plane and intersect, impinge or collide in free space (i.e., not within a chamber) to form a resultant spray the proceeds or flows generally in the x direction. A y-z cross section of this resultant spray at a point x₀ reveals that its length Δz is much greater than its width Δy.

Beyond the intersection where the jets impinge upon one another, the jets are seen to interact so as to spread rapidly in the plane that is perpendicular to the of the plane of the original jets - applicants call this downstream flow a "sheet jet" so as to reflect the change in cross-sectional shape of the jet from the cross section of the original round jets. In keeping with tradition, applicants say that the plane in which the jet is spreading most rapidly (i.e., here - x-z plane) has a characteristic fan angle, Φ. Its rate of spread in the x-y plane is said to have a characteristic thickness angle, θ.

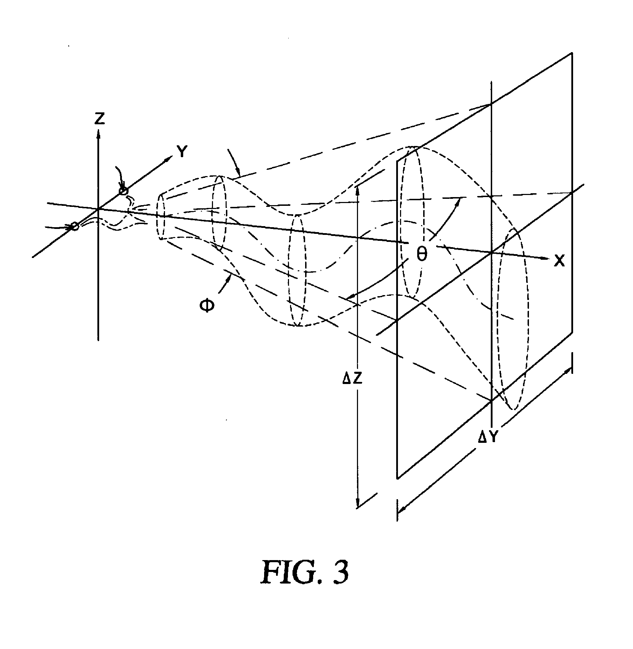

By imposing an instability on these round jets (in the form of an oscillation of the impinging jets' flow about their respective centerlines), applicants have discovered that the resulting sheet jet will also oscillate about its x-axis so as to wet a much larger cross-sectional area at any downstream distance from the jet's origin (see FIG. 3). The thickness angle θ for this oscillating sheet is greatly increased beyond that which was seen for the relatively steady state flow, as seen in FIG. 2.

Referring again to FIG 3, by causing the flow from the jets to oscillate about their centerlines in the x-y plane, the sheet jet is also seen to oscillate about the x-axis so as to wet a much larger y-z cross-sectional area at any downstream value of x. This is called a "full coverage" spray.

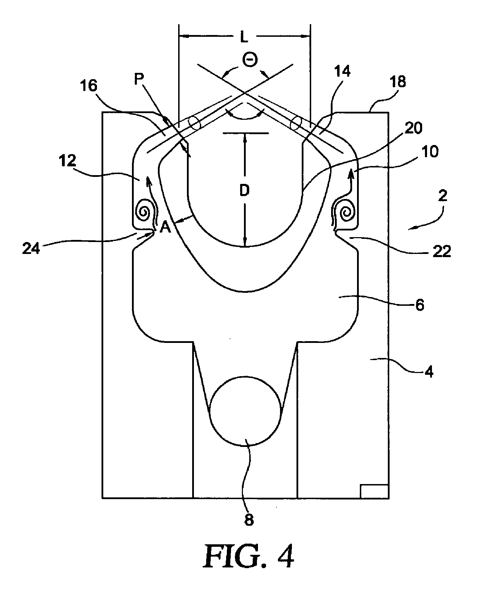

One of the preferred embodiments of the device used to create the FIG. 3 flow is illustrated in FIG. 4. This is a top view (note: this could also be the cross-sectional view of a member that has a flow channel which is molded into the member's interior) of a member 2 whose top surface 4 has molded into it a fluid circuit 6. This circuit has an inlet 8 and two branches or legs 10, 12 which divide the inlet flow and direct divided flows to respective orifices 14, 16 at the end of each of the branches. The width of branches 10 and 12 are each seen to decrease in cross sectional area as the orifice is approached so the branches to serve to accelerate the liquid that flows through them. The orifices 14, 16 illustrated in this exemplary embodiment are circular in cross section and so shape round jets of fluid (but could also be square or rectangular to shape square, rectangular or thin linear/planar jets) which have a characteristic dimension of P.

The front face 18 of this member 2 is shaped such that the length or section 20 between the opposing orifices 14, 16 is intended towards the inlet 8 to a depth of D so that there is no wall section adjacent these orifices to which the jets that issue from them would be inclined to attach themselves. Thus, the fluid jets issuing from opposing orifices 14 and 16 are referred to as "free" or unattached jet flows.

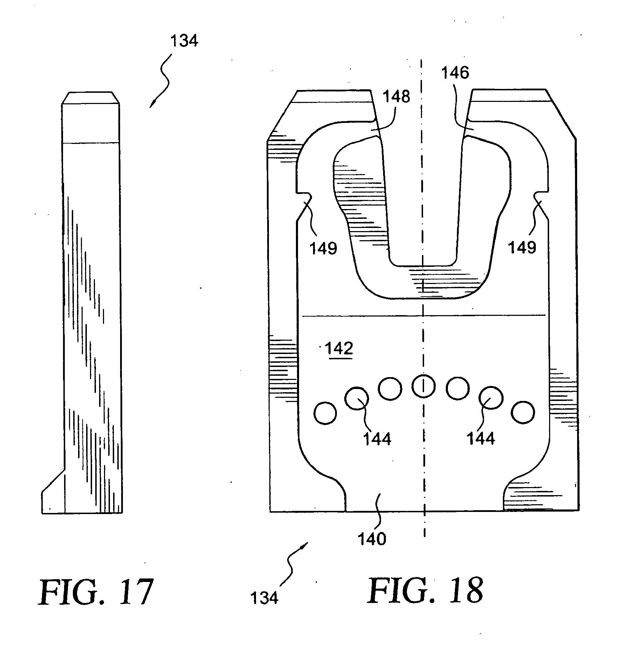

The centerlines of the orifices 14, 16 are seen to lie in the same plane and to intersect at a "jet angle" Θ. The distance between the orifices (e.g., 2.905mm) is denoted as L (as seen in Figs. 4 and 18).

Branch 10 is a fluid conveying channel and defines a fluid flow path including a sidewall segment with an inwardly projecting abrupt protrusion 22 which serves to abruptly reduce the branch's cross sectional area A and to throttle fluid flow around the protrusion, thereby creating a separation region downstream the protrusion 22. A time-varying or unsteady flow vortex forms in the separation region downstream of protrusion 22. Branch 12 defines a similar fluid conveying channel or fluid flow path including a sidewall segment with an inwardly projecting abrupt protrusion 24 which serves to abruptly reduce the branch's cross sectional area and to throttle fluid flow around the protrusion, thereby creating a separation region downstream the protrusion 24. Here again, a time-varying or unsteady flow vortex forms in the separation region downstream of protrusion 24.

The time-varying action of these vortices give the jets which issue from each orifice 14, 16 a time-varying deflection from the orifice's central axis, thereby generating the flows which impinge or collide to make an oscillating sheet. The characteristic dimension of each of these throttled areas is denoted as A.

Applicant's research with such flows has shown that the jet angle Θ is a major controlling factor in establishing the oscillating sheet's fan angle Φ. For example, applicant has found that as the jets are made to effectively face each other (i.e., Θ goes to 170 - 180 degrees) that the fan angle goes to 360 degrees. Applicants also found that this device's jet angle Θ greatly impacts the size of the droplets in the resulting spray, with larger jet angles Θ yielding smaller droplet sizes. Additionally, applicant found that the amount of flow throttling or vorticity creation occurring in each of the branch flows affects the magnitude of the jet's oscillations and the resulting thickness angle θ of the oscillating sheet. If there is no throttling in the branch flows for the embodiment shown in FIG. 4, it was observed that the downstream flow more closely resembles the flow shown in FIG. 2 than that shown in FIG. 3.

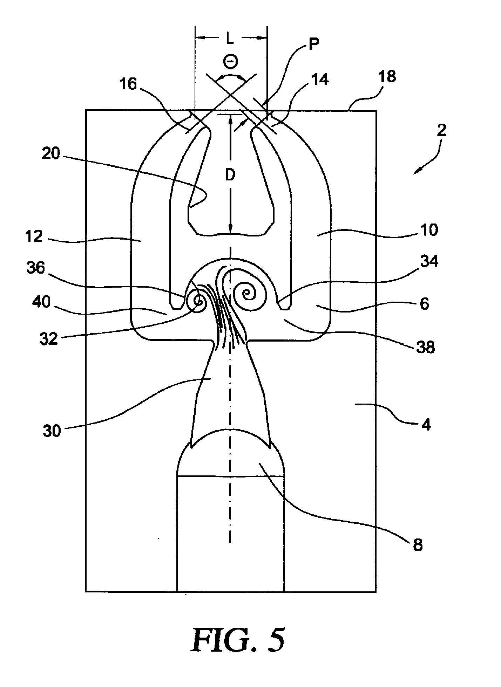

It should be noted that there are many other ways to introduce such periodic instabilities in the jets which flow from devices that are similar to that shown in FIG. 4. For example, shown in FIG. 5 is a top view of a second preferred embodiment of the present invention. Again, it can be seen that we have a member 2 whose top surface 4 has molded into it a fluid circuit 6. This circuit has an inlet 8 and two branches or legs 10, 12 which divide the inlet flow and direct it to an orifice 14, 16 that lies at the end of each of these branches. The width of these branches is seen to decrease in size as its orifice is approached so as to allow the branches to serve to accelerate the liquid that flows through them. The orifices shown here take the shape of round jets (note: they could just as easily be square, rectangular or planar jets) which have a characteristic dimension of P.

The front face 18 of this member 2 is shaped such that the length or section 20 between these orifices is indented towards the inlet 8 to a depth of D so that there is no wall section adjacent these orifices to which the jets that issue from them would be inclined to attach themselves. Thus, what effectively issues from these orifices are what we call "free" jet flows.

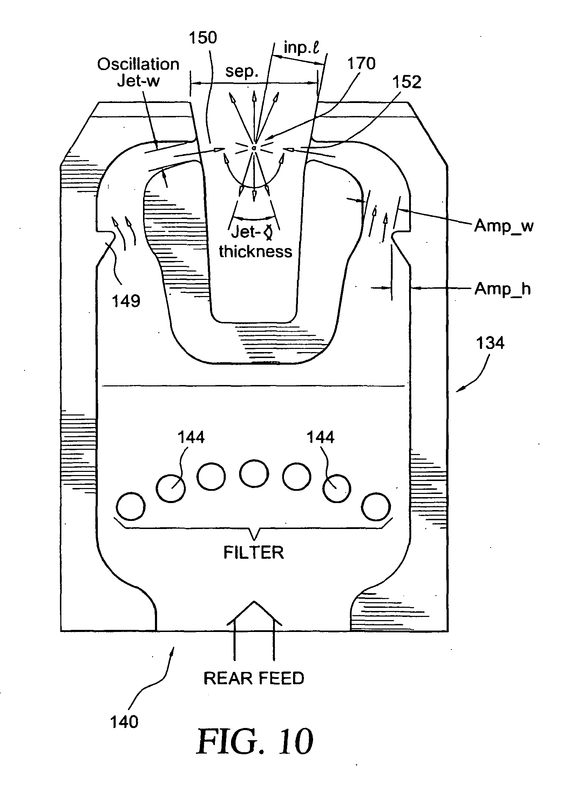

The centerlines of these orifices 14, 16 are seen to lie in the same plane and to intersect at what we call the jet angle, Θ. The distance between the orifices is denoted as L (in Fig. 4) and "sep" (in Fig. 10).

Between the inlet 8 and the branches 10, 12 is a power nozzle 30 which is characterized by its decrease in cross-sectional area as the liquid flows further along the nozzle; this decrease serving to accelerate the liquid that flows through it.

The portion of the fluid circuit that is proximate the point, where the extended centerline of the power nozzle is seen to intersect with the boundary wall 32 that is opposite it, is seen to take the shape of an inverted U whose ends 34, 36 approach the power nozzle so as to form flow entries 38, 40 into the branches 10, 12. This portion is configured in this manner so that unsteady vortices will be created in this region (see FIG. 5) which serves to create a periodic increase and decrease in the rate at which liquid is introduced into the branches. This flow phenomenon is again seen to create the previously described oscillations of the sheet jet that is formed by the intersection of the now oscillating free jets that flow from the branch orifices 14, 16.

Different fluidic oscillators using interacting jets are described in, for example, USPN 6,253,782 and USPAN 10/979,032, both having the same Assignee as the present invention. However, the previous fluidic oscillators had jet interactions occurring within interaction chambers that defined part of the oscillator's fluidic circuit and which were located upstream of the oscillator's throat/outlet(s) and any expansion section that the oscillator might have.

The present invention is seen to be configured differently, causing impinging jet intersections to occur totally outside the oscillator's outlet or expansion section, in free space or in an ambient environment. This can be contrasted with that of the invention disclosed in USPAN 10/979,032 which had the jet intersections occurring proximate the oscillator's outlets and in the vicinity of the oscillator's expansion section.

Applicant's most recent research suggests that the same upstream disturbances that are used in the present invention, or one similar to them, might also be used in the "thick/three-dimensional" oscillator of USPAN 10/979,032 to further improve upon that oscillator's ability to laterally spread the spray which it emits.

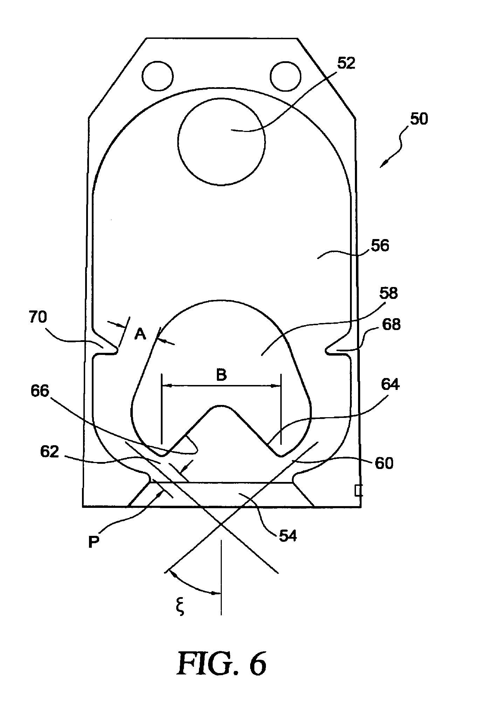

Turning now to FIG. 6, the top view of a fluidic oscillator 50 (similar to USPAN 10/979,032) is characterized by having a fluidic circuit located within the member's top surface (note: this could also be the cross-sectional view of a member that has a flow channel which is molded into the member's interior). The fluidic circuit used in this application has an inlet 52, an outlet 54, a channel 56 whose floor and sidewalls define a fluid passage connecting the inlet and outlet, and a barrier 58 located proximate the outlet that rises from the channel floor, with the barrier configured such that:
(i) barrier 58 divides the channel in the region of the barrier into what are herein denoted as first and second co-planar power nozzles 60, 62
(ii) each of the nozzles 60, 62 have a distal end downstream portion whose cross section is characterized by a characteristic length P and the angle ξ that a centerline projecting normal to this cross section makes with the member's centerline,
(iii) the barrier 58 having a width that is characterized by the length B between the power nozzles' distal end downstream portions, and
(iv) barrier portion 64 between the power nozzles is indented towards the oscillator's inlet so that the boundary surface 66 in this region is pulled back from the issuing jets' centerlines to cause flow separation in this region.

This flow separation region is seen to promote the formation of unsteady vortices in this region. These serve to cause the resulting sheet jet formed by the jets to have significant lateral motions and to yield a comparatively large thickness angle, θ, for the resulting sheet jet.

It should also be noted that the oscillator shown in FIG. 6 has been improved upon from that disclosed in USPAN 10/979,032 by the addition to the outer sidewalls on either side of the barrier of inwardly projecting abrupt protrusions 68, 70 whose characteristic dimension is denoted as A. Inwardly projecting protrusions 68, 70 serve to throttle the flow around each of the protrusions and to create a flow separation region downstream of each of the protrusions. Unsteady flow vortices are seen to form in each of these separation regions. The action of these vortices is seen to give the jets which issue from each orifice and the oscillation sheet which they form downstream even more thickness spread. Additionally, the resulting flows from this oscillator are also seen to exhibit a more uniform spatial distribution of smaller droplets in the downstream portions of its sprays.

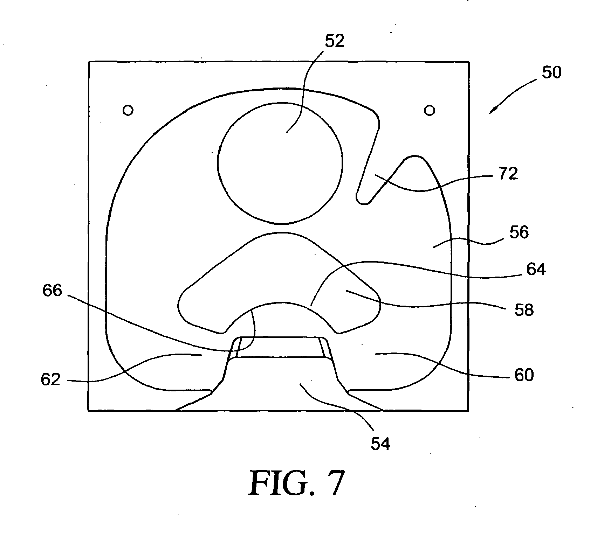

Another embodiment which presents another method of generating the upstream flow disturbances necessary to increase the resulting sheet jet's rate of thickness spread is illustrated in FIG. 7. This embodiment is seen to have a single offset inwardly projecting protrusion 72 extending from a sidewall proximate the inlet 52. Large, abrupt protrusion 72 also serves to throttle the fluid's flow so as to create a flow separation region downstream of the protrusion, as fluid flows in via inlet 52 and flows toward nozzles 60, 62. Unsteady flow vortices are seen to form in the protrusion's separation region which causes the flow from the power nozzle 60 on the nearest side of the fluidic to exhibit the greater vorticity, ultimately resulting in the oscillation of a resulting the sheet jet that is formed downstream. The oscillations result in the flow from this fluidic exhibiting ever greater thickness spread.

It will be appreciated by those of skill in the art that the full coverage fluidic oscillator embodiments of FIGS 3-7 employ branch vortex inducing structures such as an inwardly projecting protrusions (e.g., 22, 24, 68, 70 and 72) configured to throttle the flow of fluid through branch by creating a separation region downstream of the protrusion, where the branch's fluid flow is thereby forced to oscillate or yaw such that the fluid jet oscillates about that fluid jet's central steady state axis. The full coverage fluidic oscillator thereby causes a time varying shift in the jet and the resultant full coverage sheet jet has a selected thickness angle, where the sheet jet's thickness angle is controlled in response to at least one of first fluid jet oscillation amplitude and second fluid jet oscillation amplitude.

The gap between the amplifier (e.g., 22, 24, 68, 70 and 72) and the wall (amp_gap) can be used to control the thickness angle of the resultant spray. For an amp_gap to power nozzle width ratio 0f 1.57, the spray thickness is about 10 - 15 deg. Increasing the amp_gap to power nozzle width ratio decreases the resultant spray's thickness, but can also make the resultant spray less uniform or consistent. Decreasing the amp_gap to power nozzle width ratio increases the resultant spray's thickness up to about 25 deg by increasing the vorticity upstream of the jet, increasing the jet's instability.

Further increases in resultant spray thickness (up to 75 deg) is achieved by moving the jet interaction within the nozzle, so that the interaction region is bounded by nozzle walls as in Fig 6.

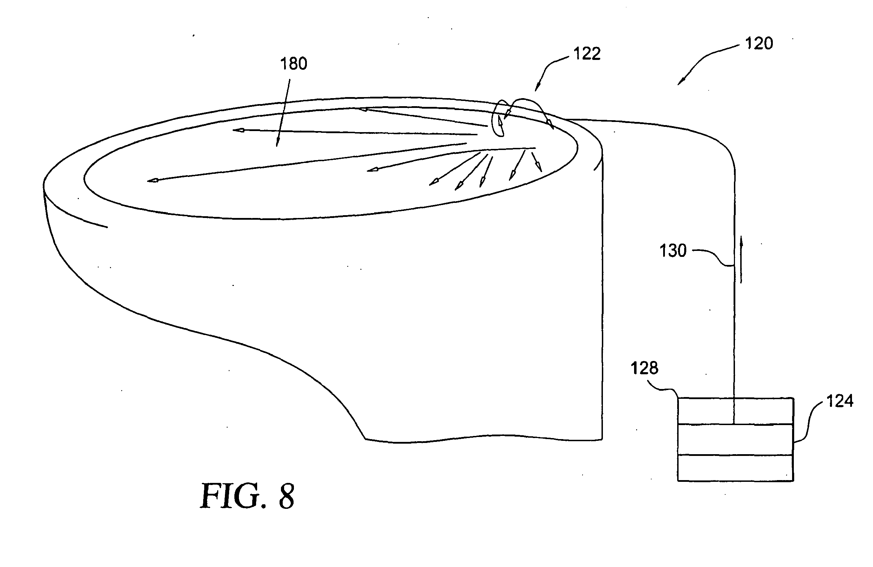

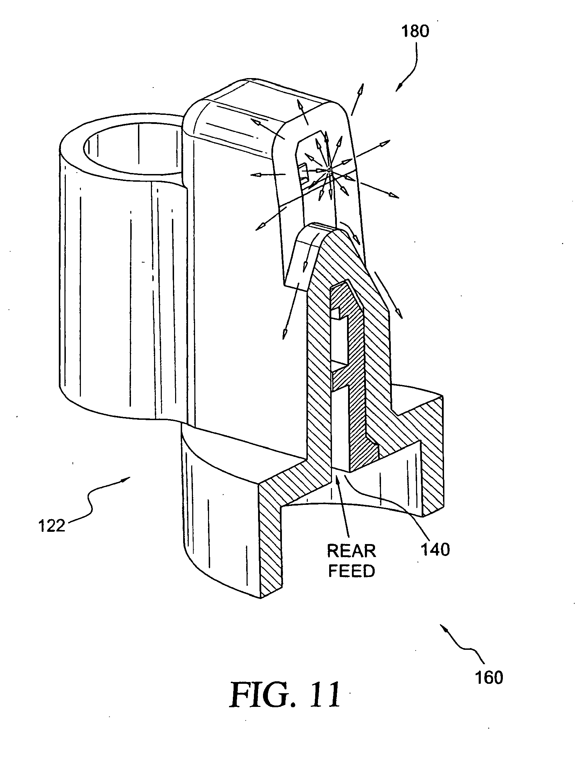

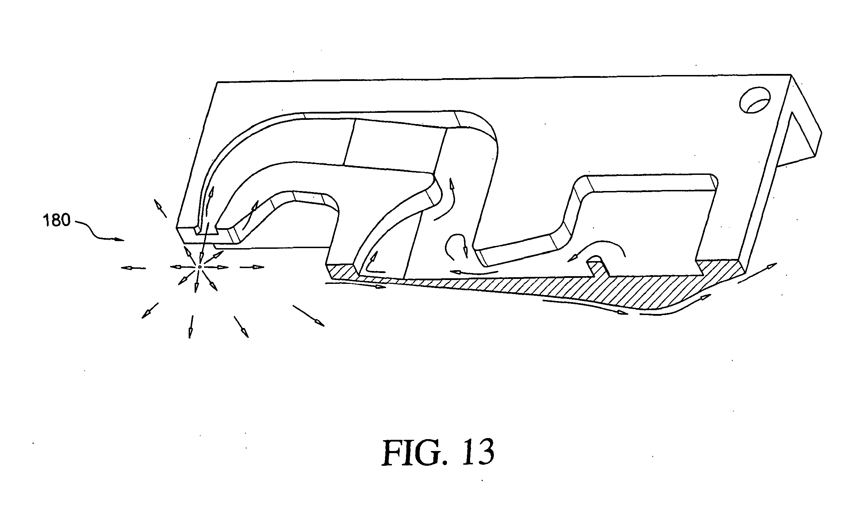

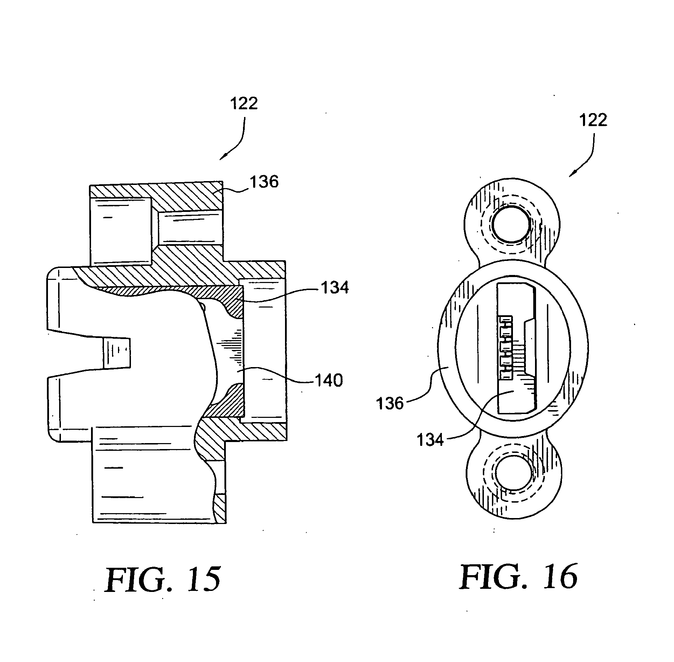

Turning now to the embodiments illustrated in Figs 8-18, an automated toilet bowl cleaning system 120 and the method of the present invention economically and safely provides substantially complete cleaning coverage of a standard toilet bowl's interior hemispherical surface by periodically spraying a uniform pattern of fine drops (preferably 300-400 microns VMD) of a solution formulated for cleaning, disinfecting or sanitizing the bowl from a single nozzle assembly 122 that is supplied with pressurized fluid flow from a pump 124. Pump 124 is preferably battery powered and housed in a compact resilient housing 128 configured to attach or mount onto or near the toilet 126. Pump 124 is in fluid communication with nozzle assembly 122 via a flexible supply tube 130 having a hollow interior lumen. Spray velocity when pump 124 is activated is low enough to result in a "soft spray" that prevents splatter or splashing from the bowl's surface.

High pressure pumps use excessive energy and present possible safety issues, and so, in the present invention, a low operating pressure of approximately 0,207*10⁵ Pa [three (3) pounds per square inch (PSI)] is generated at the outlet of pump 124. With that low pressure, nozzle assembly 122 is advantageously configured to uniformly spray over substantially all of a three hundred sixty degree (360°) circular spray pattern, by virtue of a specially adapted insert or fluidic circuit 134 received in a socket 138 integrally formed in a nozzle assembly housing 136. Housing 136 supports and aims the nozzle assembly's spray generating components.

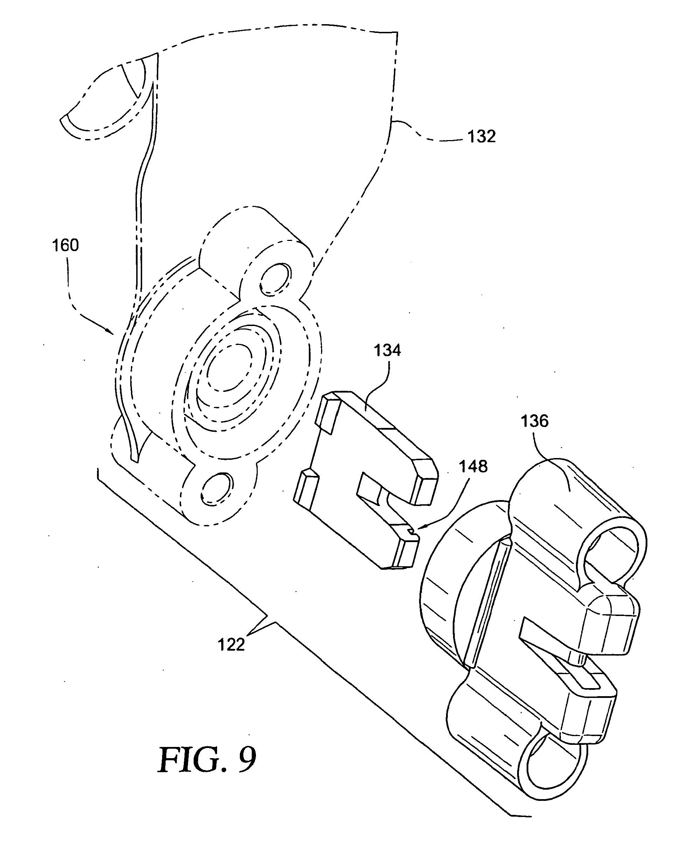

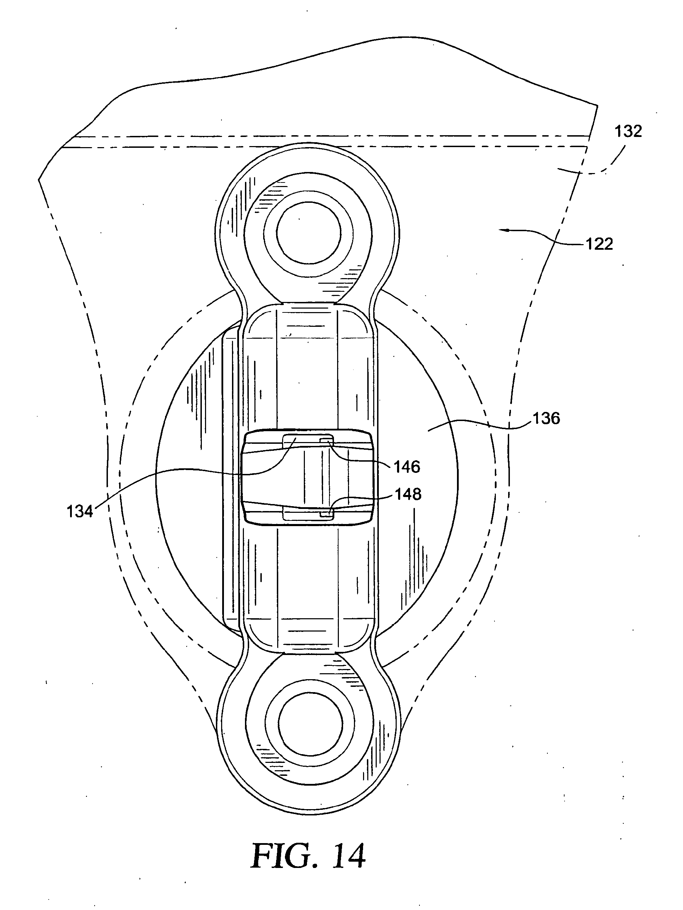

Nozzle assembly 122 includes, preferably, an oscillating jet fluidic circuit 134 that has no moving parts. The nozzle assembly occupies very little space in the bowl and so is conveniently mounted adjacent the bowl's rim, preferably by a resilient polymer hook (best seen in Figs 9 and 14). The battery powered pump's housing 128 also occupies very little package space, thereby making the entire system quick and easy to install in confined spaces.

As noted above, fluidic circuits and fluidic oscillators adapted to generate a spray in a sheet are known, and commonly owned US patent 4151955 discloses a fluid dispersal device utilizing the Karman Vortex street phenomenon to cyclically oscillate a fluid stream before issuing the stream in a desired flow pattern. A chamber includes an inlet and outlet with an obstacle or island disposed therebetween to establish the vortex street. The vortex street causes the stream or jet to be cyclically swept transversely of its flow direction in a manner largely determined by the size and shape of the obstacle relative to the inlet and outlet, the spacing between the obstacle and the outlet, the outlet area, and the Reynolds number of the stream. Depending on these factors, the flow pattern of the stream issued from the outlet may be (a) a swept jet, residing wholly in the plane of the device and which breaks up into droplets solely as a result of the cyclic sweeping, the resulting spray pattern forming a line when impinging on a target; or (b) a swept sheet, the sheet being normal to the plane of the device and being swept in the plane of the device, the resulting pattern containing smaller droplets than the swept jet pattern and covering a two-dimensional area when impinging upon a target.

While fluidic circuits have been adapted to generate spray patterns well suited for many applications, such as when spraying planar target areas like windshields, they have not, before now, been adapted to spray substantially the entire peripheral wall interior surface of something like a bowl.

Nozzle assembly 122 differs from the prior art in that the fluidic circuit's inlet 140 receives the cleaning fluid at the selected low pressure [e.g., 0,207*10⁵ Pa (3 P.S.I.)] and the fluid then flows into and through interior chamber 142 having a plurality of obstacles or islands (e.g., filter posts 144) along a fluid flow path of varying cross sectional area, terminating distally in a first and second outlets or output lumens, 146, 148.

In the embodiments illustrated in Figs 10 and 18, first output lumen 146 and second output lumen 148 each have an inwardly projecting tapered protrusion, obstacle or amplifier 149 defined in the lumen sidewall. Amplifiers 149 cause jet instabilities resulting in varying thickness in the spray, as well as uniformly varying or oscillating angular displacement, with respect to the output lumen's central axis (described in more detail, below). The present inventors are also inventors for commonly owned US Patent Application 10/979,032, filed 11/1/04, which describes the features and effect of structures like amplifier 149.

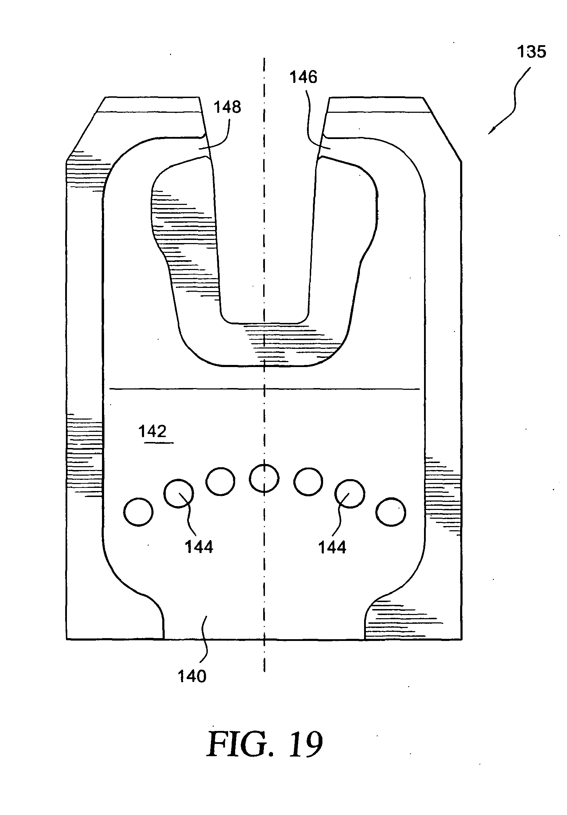

In an alternative embodiment illustrated in Fig. 19, a non-oscillating jet fluidic circuit 135 lacks the amplifier obstacles designed to induce oscillation in the opposing fluid jets, and so the impinging fluid jets do not vary or oscillate in thickness or angular offset, thereby colliding to generate a substantially omni-directional spray pattern with almost no thickness, effectively generating a sheet spray pattern. This embodiment is believed to be less effective for cleaning, and is not within the scope of the present invention.

When fluid is pumped into nozzle assembly 122, that fluid flow is divided into a first oscillating output fluid stream or jet, from first output lumen 146 and a second oscillating output fluid stream or jet, from second output lumen 148.

The new development provided by nozzle assembly 122 is integration of a fluidic circuit in a novel assembly that (for side feed embodiments) can spray over substantially all of a three hundred sixty degree (360°) circular spray pattern, by virtue of a specially adapted oscillating jet fluidic circuit 134. Nozzle assembly 122 creates and aims first fluid jet 150 in a selected direction to impinge upon opposing second fluid jet 152. First jet 150 and second jet 152 each oscillate about a central fluid jet axis and impinge or collide against one another to make a resultant circular horizontal spray pattern aligned with a horizontal plane that is substantially parallel to the toilet bowl's rim when the system is mounted. The resulting circular spray pattern reaches even that portion of the bowl's surface that lies behind the nozzle assembly, from the perspective of the point of impingement of the jets.

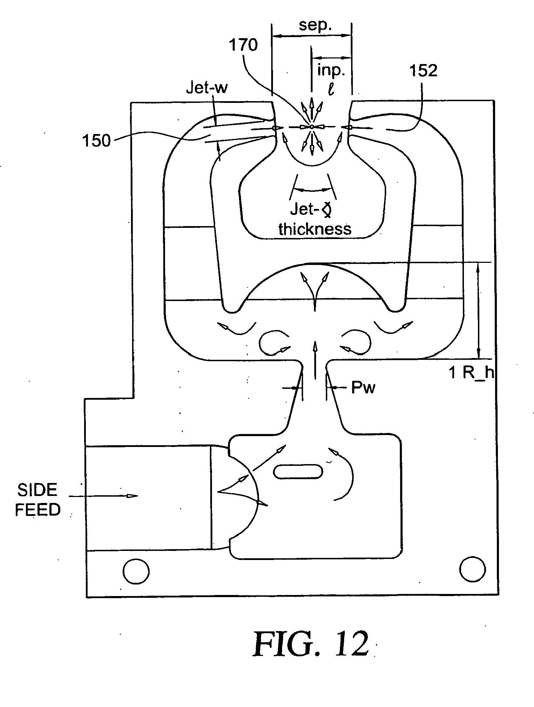

Nozzle assembly 122 generates the first and second impinging or intersecting oscillating fluid jets at an angle of intersection for the jets (or "jet angle" as shown in Figs 10 and 12) selected to provide a spray pattern geometry with uniform coverage (around the bowl) and thickness (in vertical spray pattern cross section), and as best seen in Fig 1, the impinging jets 150, 152 result in a spray pattern 180 that is confined within the bowl of toilet 126. Spray pattern 180 does not extend above the bowl's interior surface, and so can be characterized as confined within an imaginary hemisphere, such that substantially no spray projects above the plane defining the bowl's upper circumferential edge.

The nozzle assembly embodiments shown in Figs 9-11 and 14-19) incorporate a "rear feed" configuration for receiving the pumped fluid, and therefore provide slightly less than full 360° coverage.

Cleaning system 120 preferably includes battery powered pump, but the power supply for pump 124 can include a conventional AC power supply adapted for connection to a standard outlet. Pump 124 is configured with a programmable controller or a timer programmed to periodically energize the pump and spray the bowl's interior surface with the fluid, without requiring the presence of a person. Pump 124 is also optionally activated in response to a manual control input, such as a switch (e.g., a momentary contact, normally open switch). Pump housing 128 optionally includes or is in fluid communication with a reservoir containing a fluid selected for cleaning, deodorizing or sanitizing the toilet bowl and the energized pump draws the fluid into the pump's inlet and pumps the fluid into supply tube 130 at a selected low pressure of, e.g., 0,207*10⁵ Pa (3 PSI). The fluid fed from supply tube 130 into the nozzle assembly inlet 160, whereupon the fluid enters the fluidic oscillator's interior chamber 142, which defines first and second fluid flow paths terminating in first output lumen 146 and opposing second output lumen 148 to generate first and second oscillating fluid jets 150, 152. First and second jets 150, 152 intersect or impinge on one another at a selected jet impingement angle ("Jet 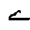 ") to form the sheet spraying fluid droplets in every direction to wet substantially the entire interior surface of the bowl.

Since first jet 150 and second jet 152 each oscillate or alter direction in a time-varying manner that appears to be unstable, the intersection point 170 where the impinging opposed jets collide changes or varies slightly over time, and so the resulting sheet 180 has a vertical thickness.

The exterior shape of geometry of the nozzle assembly 122 contributes to the flow of fluid behind or at the rear of the nozzle assembly housing 128, and so the resulting sheet of spray 180 can have 360° of coverage or somewhat less, where the nozzle assembly 122 blocks some spray in the areas behind the nozzle assembly.

The jet angle ("Jet 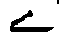 ") is defined as the angle of incidence for each of the first and second jets, and the applicants have found that a jet angle of 180° creates a substantially uniform pattern of coverage, meaning that fluid flow is substantially equal in every direction around the bowl, while an angle of less than 180° moves more fluid flow toward the front (directly away from nozzle assembly 122) and an angle of more than 180° moves more fluid flow toward the rear (directly at or behind nozzle assembly 122). The applicant's experiments have lead them to choose a jet angle of approximately 160°, to create a pattern of coverage having slightly more fluid flow in the front, toward the farthest portion of the bowl's interior (directly away from the nozzle assembly's mount or hook 132).

The applicants have also discovered that the nozzle assembly's first and second output lumens have to be spaced apart from one another or separated by a selected separation ("Sep" as shown in Fig. 12) and Sep must be adjusted with Jet angle to maintain an effective impact length ("imp L" as shown in Fig. 12). In applicant's development work to date, the preferred impact length or "imp L" is approximately three times the Jet width ("Jet W" as shown in Fig. 12). The nozzle assembly's first and second output lumens each have, at their respective distal ends, a substantially square orifice with a selected cross sectional area and square side length. Once beyond the orifice, the jet is modeled as a cylinder of fluid having a substantially circular cross section, and the jet width "Jet W" is a diameter substantially equal to the output lumen's orifice square side length (see Fig. 12). This description characterizes the fluid jet as if it were not oscillating in angular deflection from the central axis of the output lumen, for purposes of explanation. In fact, these alignments represent the mean position of the oscillating fluid jet over time, and the long term or steady state position of the jet's central axis is characterized as being substantially coaxially aligned with the central axis of that jet's output lumen, for purposes of this explanation.

The components of nozzle assembly 122, including housing 136, oscillating jet insert 134 and non-oscillating jet insert 135 may be manufactured from any resilient, durable material customarily used in making fluid handling or plumbing components such as durable plastics or metals.

Generally speaking, it will be appreciated by those having skill in the art that the present invention makes it possible to use a single static or non-moving nozzle assembly having no moving parts to automatically generate a spray that will wet the entire interior surface of a substantially hemispherical bowl or vessel, when fed fluid from a low pressure source.

In the broadest terms, cleaning system 120 is an automated system for unattended cleaning of the interior surface of a structure such as the interior of the bowl for a toilet 120, and includes:
(a) a pump 124 configured to provide pressurized fluid at low pressure;
(b) pump 124 being configured to be energized or actuated in response to a control signal from a timer or programmable controller;
(c) a single, static or non-moving nozzle assembly 122 adapted to be mounted within the rim of the toilet's bowl, proximate the bowl's upper circumferential rim, to hang above the bowl's interior surface (e.g., by hook 132), but in a position likely to be hidden by a toilet seat, when lowered;
(d) wherein nozzle assembly 122 further comprises:
   (i) an insert or body member 134 or 135 (preferably oscillating jet insert 134) having a chamber 142 therein, said chamber having a fluid inlet 140 for receiving fluid under pressure and admitting it into said chamber and first and second fluid outlets 146, 148 for issuing first and second pressurized fluid jets 150, 152 from chamber 142 into an ambient environment, said inlet 140 and said first and second outlets 146, 148 defining first and second flow paths therebetween for flow of fluid through said chamber;
   (ii) and when using oscillating jet insert 134, oscillation-inducing means 149 for causing the fluid jets 150, 152 issued from said first and second outlets to oscillate about their respective central axes, said oscillation-inducing means comprising surface means disposed in said flow paths and responsive to fluid from said inlet impinging thereon for establishing alternating vortices in said fluid downstream of said surface means; and
   (iii) wherein said first pressurized fluid jet 150 and said second pressurized fluid jet 152 are aimed from opposing directions toward an intersection or impingement point 170 at a jet angle of less than 180° to generate an oscillating sheet or resultant spray 180 having a selected thickness or angular extent, such that the resultant spray is substantially omni-directional and wets substantially all the bowl's interior surface from the non-moving single nozzle assembly 122.

Having described preferred embodiments of a new and improved method and apparatus, it is believed that other modifications, variations and changes will be suggested to those skilled in the art in view of the teachings set forth herein. It is therefore to be understood that all such variations, modifications and changes are believed to fall within the scope of the present invention as set forth in the claims.

## Claims

1. A system with a full coverage fluidic oscillator comprising:
a fluidic circuit (6) having a fluid inlet (8) and first and second branches (10; 12) configured to divide fluid flowing into said inlet into first and second branches (10; 12), wherein said first branch (10) terminates distally in a first orifice (14) and said second branch (12) terminates distally in a second orifice (16);
wherein at least one of said branches (10; 12) includes an oscillation inducing or vortex inducing structure (22; 24; 68; 70; 72; 149);
said first branch (10) being configured to project a first fluid jet along a first fluid jet axis in a x-y plane;
said second branch (12) being configured to project a second fluid jet along a second fluid jet axis in the x-y plane in a co-planar alignment with said first fluid jet axis, said second fluid jet axis intersecting said first fluid jet axis in free space at a selected jet angle (Θ);
at least one source of fluid under pressure in fluid communication with said chamber's fluid inlet (8);
wherein said fluid under pressure flows into said fluidic circuit (6) and projects said first and second fluid jets into free space to impinge upon one another, and wherein said impinging first and second jets generate a full coverage sheet jet having a fan angle (Φ) of approximately 360 degrees and having a selected thickness angle (θ) between 10 and 75 degrees.

2. The system defined in claim 1, wherein said fluidic oscillator comprises oscillation-inducing means (22; 24; 68; 70; 72; 149) for causing the fluid jets issued from said first orifice (14) and said second orifice (16) to oscillate about their respective central axes, said oscillation-inducing means (22; 24; 68; 70; 72; 149) comprising surface means disposed in said branches and responsive to fluid from said inlet impinging thereon for establishing alternating vortices in said fluid downstream of said surface means (22; 24; 68; 70; 72; 149); wherein said first fluid jet and said second fluid jet are aimed from opposing directions toward an impingement point at a jet angle (Θ) of less than 180° to generate an oscillating sheet or resultant spray having a selected angular extent, such that the resultant spray is substantially omni-directional and wets substantially all of an interior surface from said full coverage fluidic oscillator.

3. The system defined in claim 1 wherein said selected jet angle (Θ) is in the range of 150 degrees to 180 degrees.

4. The system defined in claim 1 wherein a first branch vortex inducing structure (22; 24; 68; 70; 72; 149) comprises an inwardly projecting protrusion (22; 24; 68; 70; 72; 149) configured to throttle the flow of fluid through the first branch (10) by creating a separation region in fluid flowing downstream of the protrusion (22; 24; 68; 70; 72; 149), and wherein said first branch's fluid flow is thereby forced to oscillate such that the first fluid jet oscillates about the first fluid jet's axis.

5. The system defined in claim 4 wherein a second branch vortex inducing structure (22; 24; 68; 70; 72; 149) comprises an inwardly projecting protrusion (22; 24; 68; 70; 72; 149) configured to throttle the flow of fluid through the second branch (12) by creating a separation region downstream of the protrusion (22; 24; 68; 70; 72; 149), and wherein said second branch's fluid flow is thereby forced to oscillate such that the second fluid jet oscillates about the second fluid jet's axis.

6. The system defined in claim 5 wherein said first fluid jet and said second fluid jet each oscillate about their respective fluid jet axes, thereby causing a time varying shift in the impinging first and second jets and generating a full coverage sheet jet having selected thickness angle (θ), where sheet jet thickness angle (θ) is controlled in response to first fluid jet oscillation amplitude and second fluid jet oscillation amplitude.

7. The system defined in claim 1, wherein said first branch has a proximal cross section that tapers to a smaller distal cross section that is smallest in area at the orifice (14), such that fluid flowing through the first branch (10) flows at increased velocity at the orifice (14).

8. The system defined in claim 1 wherein said fluidic oscillator comprises an insert (134; 135) adapted for insertion into a slot defined in a housing (136) or nozzle assembly (122).

9. The sytem defined in claim 1 wherein said selected jet angle (Θ) is approximately 160 degrees.

10. The system defined in claim 1 wherein said first branch (10) and said second branch (12) are part of a channel having a floor and sidewalls providing fluid passage connecting the inlet with said first and second branchs' distal orifices (14; 16);
said channel further including a fluid path dividing barrier having a central axis and defining the first and second orifices (14; 16), said barrier rising from the channel floor, with the barrier configured such that:
(i) said barrier divides the channel into said first and second branches (10; 12);
(ii) each of the orifices (14; 16) define a jet axis at the orifice's distal end, each of said orifice jet axis being aimed or directed at an angle ξ with respect to said barrier centerline,
(iii) said barrier having a width that is **characterized by** the length B between the power nozzles' distal ends, and
(iv) wherein said barrier defines a concave boundary surface indented towards the oscillator's inlet between the orifices (14; 16), so that the boundary surface is pulled back from the first and second fluid jets to cause unattached flow from the orifices (14; 16).

11. The system defined in claim 10 wherein said unattached flows promote the formation of oscillating first and second fluid jets, and permit said first and second fluid jets to have significant lateral motion to yield a thickness angle (θ), of between 10 and 75 degrees for the resulting sheet jet.

12. A method of generating a full coverage sheet jet of liquid comprising:
a) providing a fluid jet impingement intersection in free space;
b) projecting at least first and second oscillating fluid jets into said fluid jet impingement intersection at a selected jet angle (Θ) relative to one another and generating a continuous collision of said oscillating jets in said impingement area in free space; and
c) issuing full coverage sheet jet of fluid from said impingement area.

13. The method defined in claim 12 wherein one of said pair of fluid jets is caused to have a different flow characteristic than the other of said fluid jets and causes said sheet jet to issue from said impingement area in a selected thickness angle (θ) in the range of 10 to 75 degrees.

14. An automated bowl cleaning system (122) for unattended cleaning of the interior surface of a bowl or vessel, comprising:
(a) a pump (124) configured to provide pressurized fluid at low pressure;
(b) said pump (124) being configured to automatically be energized in response to a control signal from a timer or programmable controller;
(c) a single nozzle assembly (122) adapted to be mounted within the rim of the bowl, proximate the bowl's upper circumferential rim, to hang above the bowl's interior surface;
(d) said nozzle assembly (122) further comprising:
(i) a body member (134; 135) having a chamber (142) therein, said chamber (142) having a fluid inlet (140) for receiving fluid under pressure and admitting it into said chamber (142) and first and second fluid outlets (146; 148) for issuing first and second pressurized fluid jets (150; 152) from said chamber (142) into an ambient environment, said inlet (140) and said first and second outlets (146; 148) defining first and second flow paths therebetween for flow of fluid through said chamber (142); and
(ii) wherein said first pressurized fluid jet (150) and said second pressurized fluid jet (152) are oscillating and aimed from opposing directions toward an impingement point in free space at a jet angle (Θ) of more than 150° and less than 180° to generate a sheet or resultant spray (180), such that the resultant spray (180) is substantially omni-directional and wets the bowl's interior surface from said single nozzle assembly (122).

15. The automated bowl cleaning system of claim 14, wherein said nozzle assembly (122) comprises oscillation-inducing means (149) for causing the fluid jets (150; 152) issued from said first and second outlets (146; 148) to oscillate about their respective central axes, said oscillation-inducing means (149) comprising surface means disposed in said flow paths and responsive to fluid from said inlet (140) impinging thereon for establishing alternating vortices in said fluid downstream of said surface means; wherein said first pressurized fluid jet (150) and said second pressurized fluid jet (152) are aimed from opposing directions toward an impingement point at a jet angle (Θ) of less than 180° to generate an oscillating sheet or resultant spray (180) having a selected angular extent, such that the resultant spray (180) is substantially omni-directional and wets substantially all the bowl's interior surface from said single nozzle assembly (122).

## Patentansprüche

1. System mit einem fluidischen Oszillator mit vollem Erfassungsbereich, mit:
einer fluidischen Schaltung (6), die einen Fluid-Einlass (8) und eine erste und eine zweite Abzweigung (10; 12) hat und so konfiguriert ist, dass sie Fluid, das in den Einlass fließt, in die erste und die zweite Abzweigung (10; 12) zerteilt, wobei die erste Abzweigung (10) distal in einer ersten Öffnung (14) endet und die zweite Abzweigung (12) distal in einer zweiten Öffnung (16) endet,
wobei
mindestens eine der Abzweigungen (10; 12) eine Schwingungen oder Wirbel erzeugende Anordnung (22; 24; 68; 70; 72; 149) hat,
die erste Abzweigung (10) so konfiguriert ist, dass sie einen ersten Fluidstrahl entlang einer Erster-Fluidstrahl-Achse in einer x-y-Ebene projiziert,
die zweite Abzweigung (12) so konfiguriert ist, dass sie einen zweiten Fluidstrahl entlang einer Zweiter-Fluidstrahl-Achse in der x-y-Ebene in einer koplanaren Ausrichtung mit der Erster-Fluidstrahl-Achse projiziert, wobei die Zweiter-Fluidstrahl-Achse die Erster-Fluidstrahl-Achse in einem gewählten Strahlwinkel (Θ) im freien Raum schneidet,
mindestens eine Quelle eines unter Druck stehenden Fluids in Fluidverbindung mit dem Fluid-Einlass (8) einer Kammer steht und
das unter Druck stehende Fluid in die fluidische Schaltung (6) fließt und den ersten und den zweiten Fluidstrahl so in den freien Raum projiziert, dass sie aufeinander treffen, und der erste und der zweite Strahl, die aufeinander treffen, einen Flächenstrahl mit vollem Erfassungsbereich erzeugen, der einen Fächerwinkel (φ) von etwa 360 Grad und einen gewählten Dickenwinkel (θ) von 10 bis 75 Grad hat.

2. System nach Anspruch 1, **dadurch gekennzeichnet, dass** der fluidische Oszillator Schwingungserzeugungsmittel (22; 24; 68; 70; 72; 149) zum Veranlassen der Fluidstrahlen, die aus der ersten Öffnung (14) und der zweiten Öffnung (16) austreten, um ihre jeweilige Mittelachse zu schwingen, aufweist, wobei die Schwingungserzeugungsmittel (22; 24; 68; 70; 72; 149) Oberflächenmittel aufweisen, die in den Abzweigungen angeordnet sind und darauf reagieren, dass Fluid aus dem Einlass darauf auftrifft, um alternierende Wirbel in dem Fluid nach den Oberflächenmitteln (22; 24; 68; 70; 72; 149) zu erzeugen,
wobei der erste Fluidstrahl und der zweite Fluidstrahl aus entgegengesetzten Richtungen in einem Strahlwinkel (Θ) von weniger als 180° auf einen Auftreffpunkt gerichtet werden, um einen schwingenden Flächen- oder resultierenden Sprühnebel mit einem gewählten Winkelmaß so zu erzeugen, dass der resultierende Sprühnebel im Wesentlichen ungerichtet ist und im Wesentlichen die gesamte Innenfläche von dem fluidischen Oszillator mit vollem Erfassungsbereich aus befeuchtet.

3. System nach Anspruch 1, **dadurch gekennzeichnet, dass** der gewählte Strahlwinkel (Θ) in dem Bereich von 150 Grad bis 180 Grad liegt.

4. System nach Anspruch 1, **dadurch gekennzeichnet, dass** eine Wirbel erzeugende Anordnung (22; 24; 68; 70; 72; 149) der ersten Abzweigung einen nach innen ragenden Vorsprung (22; 24; 68; 70; 72; 149) aufweist, der so konfiguriert ist, dass er die Strömung des Fluids durch die erste Abzweigung (10) **dadurch** drosselt, dass er einen Trennungsbereich in dem nach dem Vorsprung (22; 24; 68; 70; 72; 149) fließenden Fluid erzeugt, wobei der Fluidstrom der ersten Abzweigung **dadurch** so zum Schwingen gezwungen wird, dass der erste Fluidstrahl um die Erster-Fluidstrahl-Achse schwingt.

5. System nach Anspruch 4, **dadurch gekennzeichnet, dass** eine Wirbel erzeugende Anordnung (22; 24; 68; 70; 72; 149) der zweiten Abzweigung einen nach innen ragenden Vorsprung (22; 24; 68; 70; 72; 149) aufweist, der so konfiguriert ist, dass er die Strömung des Fluids durch die zweite Abzweigung (12) **dadurch** drosselt, dass er einen Trennungsbereich nach dem Vorsprung (22; 24; 68; 70; 72; 149) erzeugt, wobei der Fluidstrom der zweiten Abzweigung **dadurch** so zum Schwingen gezwungen wird, dass der zweite Fluidstrahl um die Zweiter-Fluidstrahl-Achse schwingt.

6. System nach Anspruch 5, **dadurch gekennzeichnet, dass** der erste Fluidstrahl und der zweite Fluidstrahl jeweils um seine entsprechende Fluidstrahl-Achse schwingt, wodurch eine sich zeitlich ändernde Verschiebung beim Auftreffen des ersten und des zweiten Strahls entsteht und ein Flächenstrahl mit vollem Erfassungsbereich erzeugt wird, der einen gewählten Dickenwinkel (θ) hat, wobei der Dickenwinkel (θ) des Flächenstrahls in Reaktion auf die Schwingungsamplitude des ersten Fluidstrahls und die Schwingungsamplitude des zweiten Fluidstrahls gesteuert wird.

7. System nach Anspruch 1, **dadurch gekennzeichnet, dass** die erste Abzweigung einen proximalen Querschnitt hat, der sich zu einem kleineren distalen Querschnitt verjüngt, der an der Öffnung (14) die kleinste Fläche hat, sodass das Fluid, das durch die erste Abzweigung (10) fließt, mit einer erhöhten Geschwindigkeit an der Öffnung (14) fließt.

8. System nach Anspruch 1, **dadurch gekennzeichnet, dass** der fluidische Oszillator ein Einsatzteil (134; 135) aufweist, das zum Einführen in einen Schlitz eingerichtet ist, der in einem Gehäuse (136) oder einer Düsenanordnung (122) definiert ist.

9. System nach Anspruch 1, **dadurch gekennzeichnet, dass** der gewählte Strahlwinkel (Θ) etwa 160 Grad beträgt.

10. System nach Anspruch 1, **dadurch gekennzeichnet, dass** die erste Abzweigung (10) und die zweite Abzweigung (12) Bestandteil eines Kanals sind, der einen Boden und Seitenwände hat, die einen Fluid-Durchgang bereitstellen, der den Einlass mit den distalen Öffnungen (14; 16) der ersten und der zweiten Abzweigung verbindet,
wobei der Kanal weiterhin eine den Fluidweg teilende Trennwand aufweist, die eine Mittelachse hat und die erste und die zweite Öffnung (14; 16) definiert, wobei die Trennwand von dem Kanalboden aufsteigt und so konfiguriert ist, dass
(I) sie den Kanal in die erste und die zweite Abzweigung (10; 12) teilt,
(II) jede der Öffnungen (14; 16) an dem distalen Ende der Öffnung eine Strahlachse definiert, wobei jede der Strahlachsen der Öffnungen in einem Winkel ξ zu der Mittellinie der Trennwand verläuft,
(III) sie eine Breite hat, die von einem Abstand B zwischen den distalen Enden der Leistungsdüse bestimmt wird, und
(IV) sie eine konkave Begrenzungsfläche definiert, die zu dem Einlass des Oszillators zwischen den Öffnungen (14; 16) geneigt ist, sodass die Begrenzungsfläche von dem ersten und dem zweiten Fluidstrahl zurückgezogen wird, um eine ungehinderte Strömung aus den Öffnungen (14; 16) zu ermöglichen.

11. System nach Anspruch 10, **dadurch gekennzeichnet, dass** die ungehinderte Strömung die Bildung eines ersten und zweiten schwingenden Fluidstrahls fördert und dem ersten und den zweiten Fluidstrahl eine signifikante Querbewegung verleiht, sodass sich ein Dickenwinkel (θ) von 10 bis 75 Grad für den resultierenden Flächenstrahl ergibt.

12. Verfahren zum Erzeugen eines Flüssigkeits-Flächenstrahls mit vollem Erfassungsbereich, mit den folgenden Schritten:
a) Bereitstellen eines Auftreff-Schnittpunkts für Fluidstrahlen im freien Raum;
b) Projizieren mindestens eines ersten und eines zweiten schwingenden Fluidstrahls in den Fluidstrahl-Auftreff-Schnittpunkt in einem gewählten Strahlwinkel (Θ) zueinander und Erzeugen einer kontinuierlich Kollision der schwingenden Strahlen in dem Auftreffbereich im freien Raum und
c) Abgeben eines Fluid-Flächenstrahls mit vollem Erfassungsbereich von dem Auftreffbereich.

13. Verfahren nach Anspruch 12, **dadurch gekennzeichnet, dass** bewirkt wird, dass ein Fluidstrahl des Paars Fluidstrahlen andere Strömungseigenschaften als der andere der Fluidstrahlen hat und den Flächenstrahl veranlasst, aus dem Auftreffbereich in einem gewählten Dickenwinkel (θ) in dem Bereich von 10 bis 75 Grad auszutreten.

14. Automatisches Beckenreinigungssystem (122) zur unbeaufsichtigten Reinigung der Innenfläche eines Beckens oder Behälters, mit:
(a) einer Pumpe (124), die so konfiguriert ist, dass sie ein unter Druck stehendes Fluid mit einem niedrigen Druck bereitstellt;
(b) wobei die Pumpe (124) so konfiguriert ist, dass sie in Reaktion auf ein Steuersignal von einem Zeitschalter oder einem programmierbaren Steuergerät automatisch eingeschaltet wird; und
(c) einer Einzeldüsenanordnung (122), die so eingerichtet ist, dass sie in dem Rand des Beckens in der Nähe des oberen Umfangsrands des Beckens so angebracht werden kann, dass sie über der Innenfläche des Beckens hängt;
(d) wobei die Düsenanordnung (122) weiterhin Folgendes aufweist:
(I) ein Körperteil (134; 135) mit einer Kammer (142) darin, wobei die Kammer (142) einen Fluid-Einlass (140) zum Empfangen von unter Druck stehendem Fluid und zum Aufnehmen des Fluids in der Kammer (142) und einen ersten und einen zweiten Fluid-Auslass (146; 148) zum Abgeben eines ersten und zweiten unter Druck stehenden Fluidstrahls (150; 152) von der Kammer (142) in die Umgebung hat, wobei der Einlass (140) und der erste und der zweite Auslass (146; 148) einen ersten und einen zweiten Strömungsweg dazwischen für die Strömung des Fluids durch die Kammer (142) definieren; und
(II) wobei der erste unter Druck stehende Fluidstrahl (150) und der zweite unter Druck stehende Fluidstrahl (152) schwingen und aus entgegengesetzten Richtungen in einem Strahlwinkel (Θ) von mehr als 150° und weniger als 180° auf einen Auftreffpunkt im freien Raum gerichtet werden, um einen Flächen- oder resultierenden Sprühnebel (180) so zu erzeugen, dass der resultierende Sprühnebel (180) im Wesentlichen ungerichtet ist und die Innenfläche des Beckens von der Einzeldüsenanordnung (122) aus befeuchtet.

15. Automatisches Beckenreinigungssystem nach Anspruch 14, **dadurch gekennzeichnet, dass** die Düsenanordnung (122) Schwingungserzeugungsmittel (149) zum Veranlassen der Fluidstrahlen (150; 152), die aus dem ersten und dem zweiten Auslass (146; 148) abgegeben werden, um ihre jeweilige Mittelachse zu schwingen, aufweist, wobei die Schwingungserzeugungsmittel (149) Oberflächenmittel aufweisen, die in den Strömungswegen angeordnet sind und darauf reagieren, dass Fluid aus dem Einlass (140) darauf auftrifft, um alternierende Wirbel in dem Fluid nach den Oberflächenmitteln zu erzeugen,
wobei der erste unter Druck stehende Fluidstrahl (150) und der zweite unter Druck stehende Fluidstrahl (152) aus entgegengesetzten Richtungen in einem Strahlwinkel (Θ) von weniger als 180° auf einen Auftreffpunkt gerichtet werden, um einen schwingenden Flächen- oder resultierenden Sprühnebel (180) mit einem gewählten Winkelmaß so zu erzeugen, dass der resultierende Sprühnebel (180) im Wesentlichen ungerichtet ist und im Wesentlichen die gesamte Innenfläche des Beckens von der Einzeldüsenanordnung (122) aus befeuchtet.

## Revendications

1. Système avec un oscillateur fluidique à couverture complète comprenant :
un circuit fluidique (6) ayant une entrée (8) de fluide et des première et deuxième branches (10 ; 12) configuré pour diviser le fluide s'écoulant dans ladite entrée en des première et deuxième branches (10 ; 12), où ladite première branche (10) se termine de manière distale dans un premier orifice (14) et ladite deuxième branche (12) se termine de manière distale dans un deuxième orifice (16) ;
où au moins l'une desdites branches (10 ; 12) comporte une structure (22 ; 24 ; 68 ; 70 ; 72 ; 149) induisant des remous ou induisant une oscillation;
ladite première branche (10) étant configurée pour projeter un premier jet de fluide le long d'un premier axe de jet de fluide dans un plan x-y ;
ladite deuxième branche (12) étant configurée pour projeter un deuxième jet de fluide le long d'un deuxième axe de jet de fluide dans le plan x-y dans un alignement coplanaire avec ledit premier axe de jet de fluide, ledit deuxième axe de jet de fluide présentant une intersection avec ledit premier axe de jet de fluide dans un espace libre au niveau d'un angle de jet sélectionné (θ) ;
au moins une source de fluide sous pression en communication fluidique avec ladite entrée (8) de fluide de la chambre;
où ledit fluide sous pression s'écoule dans ledit circuit fluidique (6) et projette lesdits premier et deuxième jets de fluide dans un espace libre pour que l'un empiète sur l'autre, et où lesdits premier et deuxième jets qui s'empiètent génèrent un jet en nappe à couverture complète ayant un angle (Φ) de ventilation de 360 degrés approximativement et ayant un angle (θ) d'épaisseur sélectionné entre 10 et 75 degrés.

2. Système selon la revendication 1, dans lequel ledit oscillateur fluidique comprend un moyen (22 ; 24 ; 68 ; 70 ; 72 ; 149) induisant une oscillation pour amener les jets de fluide émis dudit premier orifice (14) et dudit deuxième orifice (16) à osciller autour de leurs axes centraux respectifs, ledit moyen (22 ; 24 ; 68 ; 70 ; 72 ; 149) induisant une oscillation comprenant un moyen de surface disposé dans lesdites branches et en réponse à du fluide de ladite entrée empiétant dessus des remous alternatifs sont établis dans ledit fluide en aval dudit moyen de surface (22 ; 24 ; 68 ; 70 ; 72 ; 149) ; où ledit premier jet de fluide et ledit deuxième jet de fluide sont orientés depuis des directions opposées vers un point d'empiètement à un angle (θ) de jet de moins de 180° pour générer une nappe d'oscillation ou une pulvérisation résultante ayant une étendue angulaire sélectionnée, de sorte que la pulvérisation résultante soit essentiellement omnidirectionnelle et mouille essentiellement l'ensemble d'une surface intérieure à partir dudit oscillateur fluidique à couverture complète.

3. Système selon la revendication 1 où ledit angle (θ) de jet sélectionné se trouve dans la plage de 150 degrés à 180 degrés.

4. Système selon la revendication 1 où une structure (22 ; 24 ; 68 ; 70 ; 72 ; 149) induisant un vortex dans la première branche comprend une protubérance (22 ; 24 ; 68 ; 70 ; 72 ; 149) se projetant vers l'intérieur configurée pour limiter l'écoulement de fluide à travers la première branche (10) en créant une région de séparation dans un fluide s'écoulant en aval de la protubérance (22 ; 24 ; 68 ; 70 ; 72 ; 149), et où ledit écoulement de fluide dans la première branche est ainsi forcé à osciller de sorte que le premier jet de fluide oscille autour de l'axe du premier jet de fluide.

5. Système selon la revendication 4 où une structure (22 ; 24 ; 68 ; 70 ; 72 ; 149) induisant un vortex dans la deuxième branche comprend une protubérance (22 ; 24 ; 68 ; 70 ; 72 ; 149) se projetant vers l'intérieur configurée pour limiter l'écoulement de fluide à travers la deuxième branche (12) en créant une région de séparation en aval de la protubérance (22 ; 24 ; 68 ; 70 ; 72 ; 149), et où ledit écoulement de fluide dans la deuxième branche est ainsi forcé à osciller de sorte que le deuxième jet de fluide oscille autour de l'axe du deuxième jet de fluide.

6. Système selon la revendication 5 où chacun dudit premier jet de fluide et dudit deuxième jet de fluide oscille autour de leurs axes de jet de fluide respectifs, amenant ainsi un décalage à variation temporelle dans les premier et deuxième jets qui s'empiètent et générant un jet en nappe à couverture complète ayant un angle (θ) d'épaisseur sélectionné, où l'angle (θ) d'épaisseur du jet en nappe est commandé en réponse à l'amplitude d'oscillation du premier jet de fluide et à l'amplitude d'oscillation du deuxième jet de fluide.

7. Système selon la revendication 1, dans lequel ladite première branche a une section transversale proximale qui s'effile à une section transversale distale plus petite qui est la plus petite en surface au niveau de l'orifice (14), de sorte que le fluide s'écoulant à travers la première branche (10) s'écoule à une vitesse plus importante au niveau de l'orifice (14).

8. Système selon la revendication 1 dans lequel ledit oscillateur fluidique comprend une pièce rapportée (134 ; 135) adaptée pour être insérée dans une fente définie dans un boîtier (136) ou un ensemble de buses (122).

9. Système selon la revendication 1 dans lequel ledit angle (θ) de jet sélectionné est approximativement de 160 degrés.

10. Système selon la revendication 1 dans lequel ladite première branche (10) et ladite deuxième branche (12) font partie d'un canal ayant un plancher et des parois latérales fournissant un passage de fluide reliant l'entrée auxdits orifices distaux (14 ; 16) des première et deuxième branches ;
ledit canal comportant en outre une barrière divisant le chemin de fluide ayant un axe central et définissant les premier et deuxième orifices (14 ; 16), ladite barrière s'élevant du plancher du canal, avec la barrière configurée de sorte que :
(i) ladite barrière divise le canal en lesdites première et deuxième branches (10 ; 12) ;
(ii) chacun des orifices (14 ; 16) définit un axe de jet au niveau de l'extrémité distale de l'orifice, chacun dudit axe de jet de l'orifice étant orienté ou dirigé à un angle ξ par rapport à ladite ligne centrale de la barrière,
(iii) ladite barrière ayant une largeur qui est **caractérisée par** la longueur B entre les extrémités distales d'injection principale, et
(iv) où ladite barrière définit une surface limite concave projetée vers l'entrée de l'oscillateur entre les orifices (14 ; 16), de sorte que la surface limite soit en retrait des premier et deuxième jets de fluide pour provoquer un flux non lié à partir des orifices (14, 16).

11. Système selon la revendication 10 dans lequel lesdits écoulements non liés favorisent la formation de premier et deuxième jets de fluide oscillants, et permettent auxdits premier et deuxième jets de fluide d'avoir un mouvement latéral significatif pour donner un angle d'épaisseur (θ), entre 10 et 75 degrés pour le jet en nappe résultant.

12. Procédé pour générer un jet de liquide en nappe à couverture complète comprenant le fait :
a) de prévoir une intersection d'empiètement de jets de fluide dans un espace libre ;
b) de projeter au moins des premier et deuxième jets de fluide oscillants dans ladite intersection d'empiètement de jets de fluide à un angle (θ) de jet sélectionné l'un par rapport à l'autre et de générer une collision continue desdits jets oscillants dans ladite zone d'empiètement en espace libre ; et
c) d'émettre un jet de fluide en nappe à couverture complète de ladite zone d'empiètement.

13. Procédé selon la revendication 12 dans lequel l'un de ladite paire de jets de fluide est amené à avoir une caractéristique d'écoulement différente de l'autre desdits jets de fluide et amène ledit jet en nappe à sortir de ladite zone d'empiètement selon un angle d'épaisseur sélectionné (θ) dans la plage de 10 à 75 degrés.

14. Système (122) de nettoyage de cuve automatisé pour le nettoyage automatique de la surface interne d'une cuve ou d'un récipient, comprenant :
(a) une pompe (124) configurée pour fournir un fluide pressurisé à faible pression ;
(b) ladite pompe (124) étant configurée pour être automatiquement alimentée en réponse à un signal de commande provenant d'un minuteur ou d'une unité de commande programmable ;
(c) un seul ensemble de buses (122) adapté pour être monté dans le bord de la cuve, à côté du bord circonférentiel supérieur de la cuve, pour être accroché au-dessus de la surface interne de la cuve ;
(d) ledit ensemble de buses (122) comprenant en outre :
(i) un élément de corps (134 ; 135) ayant une chambre (142) dedans, ladite chambre (142) ayant une entrée (140) de fluide pour recevoir un fluide sous pression et pour l'admettre dans ladite chambre (142) et les première et deuxième sorties (146 ; 148) de fluide pour émettre les premier et deuxième jets de fluide pressurisés (150 ; 152) de ladite chambre dans un environnement ambiant, ladite entrée (140) et lesdits première et deuxième sorties (146 ; 148) définissant des premier et deuxième chemins d'écoulement entre eux pour l'écoulement de fluide à travers ladite chambre (142) ; et
(ii) où ledit premier jet de fluide pressurisé (150) et ledit deuxième jet de fluide pressurisé (152) oscillent et sont orientés depuis des directions opposées vers un point d'empiètement en espace libre à un angle de jet (θ) de plus de 150° et moins de 180° pour générer une nappe ou une pulvérisation résultante (180), de sorte que la pulvérisation résultante (180) soit essentiellement omnidirectionnelle et mouille la surface interne de la cuve à partir dudit seul ensemble de buses (122).

15. Système de nettoyage de cuve automatisé de la revendication 14, dans lequel ledit ensemble de buses (122) comprend un moyen (149) induisant une oscillation pour amener les jets de fluide (150 ; 152) émis desdites première et deuxième sorties (146 ; 148) à osciller autour de leurs axes centraux respectifs, ledit moyen (149) induisant une oscillation comprenant un moyen de surface disposé dans lesdits chemins d'écoulement et en réponse à du fluide de ladite entrée (140) empiétant dessus des remous alternatifs sont établis dans ledit fluide en aval dudit moyen de surface ; où ledit premier jet de fluide pressurisé (150) et ledit deuxième jet de fluide pressurisé (152) sont orientés depuis des directions opposées vers un point d'empiétement à un angle de jet (θ) de moins de 180° pour générer une nappe d'oscillation ou une pulvérisation résultante (180) ayant une étendue angulaire sélectionnée, de sorte que la pulvérisation résultante (180) soit essentiellement omnidirectionnelle et mouille essentiellement toute la surface interne de la cuve à partir dudit seul ensemble de buses (122).
